# EUROPEAN PATENT APPLICATION

(11) **EP 1 703 519 A2**
(43) Date of publication of application: **20.09.2006**
(21) Application number: 06251321.3
(22) Date of filing: 13.03.2006
(51) Int. Cl.: G11B 27/34, G11B 27/10, G11B 20/10, G11B 19/02, G06F 9/44, G06F 3/06, G06F 3/033, H04N 5/445

(54) **Reproducing apparatus and method**

(30) Priority: 14.03.2005 JP 2005071989
(71) Applicant: SONY CORPORATION, Tokyo 141 (JP)
(72) Inventor: Kojo, Tomomasa c/o Sony Corporation, Tokyo 141 (JP)
(74) Representative: DeVile, Jonathan Mark

(57) **Abstract**

A reproducing apparatus includes a data input device configured to perform a data inputting process whereby either encoded data or data obtained by decoding the encoded data is input to a storage device. A data readout device is configured to perform a data reading process whereby the input data stored into the data storage device during the data inputting process is read out and the read-out input data is supplied to a data reproduction processing device. An operation display device is configured to perform a displaying operation process whereby an operation made by a user is received and information reflecting the received operation is displayed. A control device is configured to control the data input device and the operation display device in such a manner that the data inputting process is performed more preferentially than the operation displaying process if the quantity of the input data stored in the data storage device is less than a predetermined threshold.

## Description

### FIELD OF THE INVENTION

The present invention relates to a reproducing apparatus, a reproducing method, a reproducing program, a recording apparatus, a recording method, and a recording program. More particularly, the present invention relates to a recording/reproducing apparatus capable of recording and reproducing music data.

### BACKGROUND OF THE INVENTION

Music recording/reproducing apparatus are generally designed to perform a music recording process whereby externally acquired music data is encoded (e.g., compressed) and the encoded music data is recorded to an internal hard disk drive. This type of recording/reproducing apparatus further carries out a music reproducing process whereby encoded music data is read from the internal hard disk drive and decoded (e.g., decompressed) so that the resulting music data is used as the basis for outputting music.

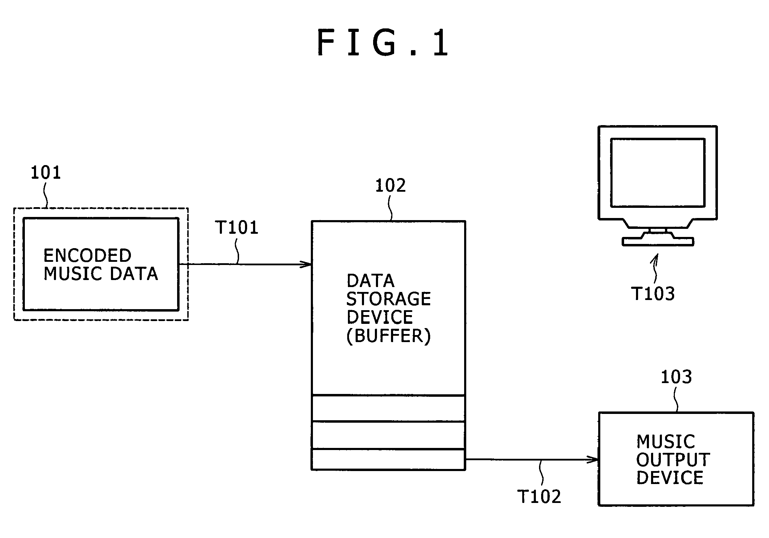

A typical music reproducing process is explained below with reference to Fig. 1. A recording/reproducing apparatus for executing the process generates a reproduction-destined music data input task T101 and a reproduction-destined music data readout task T102. The reproduction-destined music data input task T101 involves retrieving encoded music data from a hard disk drive 101, decoding the retrieved music data, and inputting the decoded data successively to a data storage device 102 (equivalent of a buffer memory). The reproduction-destined music data readout task T102 involves reading out temporarily stored encoded music data from the data storage device 102 in the order in which the data was successively input therein, and supplying the read-out music data consecutively to a music output device 103. The recording/reproducing apparatus also generates an operation display task T103 that involves performing an operation displaying process whereby a user's operations performed on an operation device are received and information reflecting the received operations is displayed on a display device.

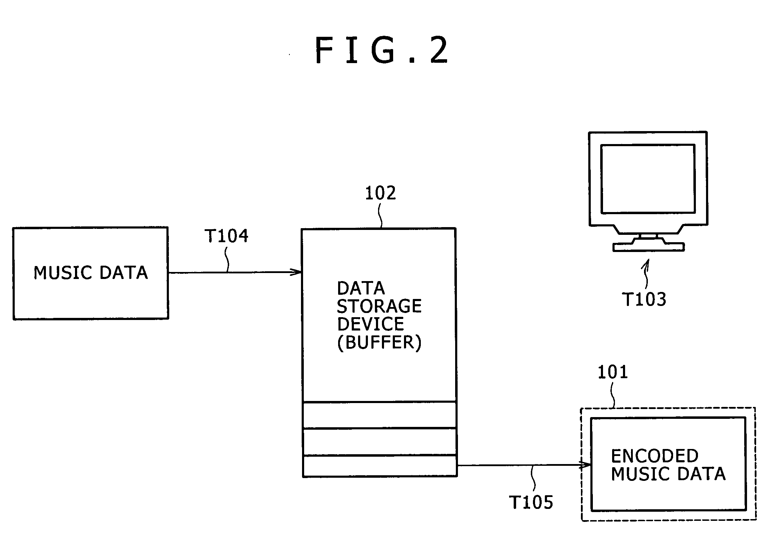

A typical music recording process is described below with reference to Fig. 2. The recording/reproducing apparatus for executing the process generates a recording-destined music data input task T104 and a recording-destined music data readout task T105. The recording-destined music data input task T104 involves encoding externally acquired music data and inputting the encoded music data successively to the data storage device 102. The recording-destined music data readout task T105 involves reading out temporarily stored encoded music data from the data storage device 102 in the order in which the data was successively input therein, and recording the read-out music data consecutively to the hard disk drive 101. The recording/reproducing apparatus also generates the operation display task T103 that involves performing the operation displaying process.

The tasks in this context are each meant to be a unit of work to be done by the CPU (central processing unit) of the recording/reproducing apparatus. Typical tasks are discussed illustratively in Japanese Patent Laid-open No. 2004-310615.

### SUMMARY OF THE INVENTION

Various aspects and features of the present invention are defined in the appended claims.

According to one embodiment of the present invention, there is provided a reproducing apparatus including: a data input device configured to perform a data inputting process whereby either encoded data or the data obtained by decoding the encoded data is input as input data to a storage device; a data readout device configured to perform a data reading process whereby the input data stored into the data storage device during the data inputting process performed by the data input device is read out and the read-out input data is supplied to a data reproduction processing device; an operation display device configured to perform an operation displaying process whereby an operation made by a user is received and information reflecting the received operation is displayed; and a control device configured to control the data input device and the operation display device in such a manner that the data inputting process is performed more preferentially than the operation displaying process if the quantity of the input data stored in the data storage device is smaller than a predetermined threshold.

During the music reproducing process carried out by the above type of recording/reproducing apparatus as shown in Fig. 1, a task scheduler or the like first assigns the right to use the CPU (called the CPU right use hereunder) to the reproduction-destined music data input task T101. In response, the CPU of the music recording/reproducing apparatus executes a reproduction-destined music data inputting process whereby encoded music data is read from the hard disk drive 101, decoded, and input successively to the data storage device 102.

When the task scheduler assigns the CPU. use right to the reproduction-destined music data readout task T102, the CPU of the recording/reproducing apparatus carries out a reproduction-destined music data reading process whereby temporarily stored music data is read successively from the data storage device 102 and supplied consecutively to the music output device 103. On the basis of the supplied music data, the music output device 103 operating independently of the CPU performs a music outputting process whereby music is output through speakers or like equipment.

During the music reproducing process carried out by the recording/reproducing apparatus as indicated in Fig. 2, the task scheduler first assigns the right to use the CPU to the recording-destined music data input task T104. In turn, the CPU of the music recording/reproducing apparatus performs a recording-destined music data inputting process whereby externally acquired music data is encoded and the encoded music data is input successively to the data storage device 102.

When the task scheduler assigns the CPU use right to the recording-destined music data readout task T105, the CPU of the recording/reproducing apparatus carries out a recording-destined music data reading process whereby temporarily stored encoded music data is read successively from the data storage device 102 and recorded consecutively to the hard disk device 101. As a result, the externally acquired music data is recorded in encoded format on the hard disk drive 101.

During the music reproducing process performed by the recording/reproducing apparatus of the typical structure as shown in Fig. 1, the CPU use right is assigned in equal proportions to the generated tasks T101, T102 and T103 without regard to the nature of the processing executed by each of these tasks.

It might then happen that when decoding encoded music data, the reproduction-destined music data input task T101 is subject to a relatively heavier processing load than the reproduction-destined music data readout task T102. In such a case, the speed at which to input the music data to the data storage device 102 can become lower than the speed at which to read the music data from the data storage device 102 for output. During the process, it may well become impossible to send the music data without interruption from the data storage device 102 to the music output device 103. This can trigger pauses in music output from the music output device 103.

During the music recording process performed by the recording/reproducing apparatus of the typical structure as indicated in Fig. 2, the CPU use right is also assigned in equal proportions to the generated tasks T103, T104 and T105 without regard to the nature of the processing executed by each of these tasks.

It might then happen that when recording encoded music data to the hard disk drive 101, the recording-destined music data readout task T105 is subject to a relatively heavier processing load than the recording-destined music data input task T104. In such a case, the speed at which to input the encoded music data to the data storage device 102 can become higher than the speed at which to read the encoded music data from the data storage device 102. During the process, the encoded music data tends to be input to the data storage device 102 faster than the device 102 can accommodate the data. This can trigger an overflow in the data storage device 102 of the encoded music data to be recorded to the hard disk drive 101. As a result, encoded music data dropouts may well occur.

The present invention has been made in view of the above circumstances and provides a reproducing apparatus, a reproducing method, a reproducing program, a recording apparatus, a recording method, and a recording program for suitably controlling the quantity of stored data in a data storage device.

According to the inventive reproducing apparatus outlined above, if the quantity of data held in the data storage device drops below the predetermined threshold leading to a possibility of the stored data getting exhausted, then the speed at which to input music data to the data storage device is raised. This makes it possible to avoid or at least reduce a likelihood of exhausting the data in the data storage device.

According to another embodiment of the present invention, there is provided a recording apparatus including: a data input device configured to perform a data inputting process whereby data is encoded and the encoded data is input to a data storage device; a data readout device configured to perform a data reading process whereby the encoded data stored into the data storage device during the data inputting process performed by the data input device is read out and the read-out encoded data is recorded to s recording medium; an operation display device configured to perform an operation displaying process whereby an operation made by a user is received and information reflecting the received operation is displayed; and a control device configured to control the data readout device and the operation display device in such a manner that the data reading process is performed more preferentially than the operation displaying process if the quantity of the encoded data stored in the data storage device is at least equal to a predetermined threshold.

According to the inventive recording apparatus outlined above, if the quantity of encoded data held in the data storage device rises above the predetermined threshold leading to a possibility of the stored data overflowing the data storage device, then the speed at which to read out the encoded data from the data storage device is raised. This makes it possible to avoid letting the encoded data overflow the data storage device.

According to the above-outlined embodiments of the present invention, if the quantity of data held in the data storage device dropping below the predetermined threshold signals the possibility of the stored data getting exhausted, then the speed at which to input music data to the data storage device is boosted so as to avoid exhausting the data in the data storage device. If the quantity of encoded data held in the data storage device rising above the predetermined threshold signals the possibility of the stored data overflowing the data storage device, then the speed at which to read out the encoded data from the data storage device is increased so as to avoid or at least hinder letting the encoded data overflow the data storage device. These are some of the features of the inventive reproducing and recording apparatuses capable of suitably adjusting the quantity of the data stored in the data storage device.

### BRIEF DESCRIPTION OF THE DRAWINGS

The invention will now be described by way of example with reference to the accompanying drawings, throughout which like parts are referred to by like references, and in which:
Fig. 1 is a schematic view showing a typical music reproducing process;
Fig. 2 is a schematic view showing a typical music recording process;
Fig. 3 is a block diagram showing a circuit structure of a recording/reproducing apparatus practiced as one embodiment of the present invention;
Fig. 4 is a schematic view explaining tasks to be carried out in a music reproducing process;
Fig. 5 is a graphic representation (part 1) plotting transitions of stored data quantities during a music reproducing process;
Fig. 6 is a graphic representation (part 2) plotting transitions of stored data quantities during the music reproducing process;
Fig. 7 is a schematic view explaining tasks to be carried out in a music recording process;
Fig. 8 is a schematic view showing a structure of program modules for the recording/reproducing apparatus;
Fig. 9 is a flowchart of steps constituting a procedure for controlling tasks during the music reproducing process;
Fig. 10 is a flowchart of steps constituting a procedure for controlling tasks during the music recording process; and
Fig. 11 is a schematic view showing how the right to use the CPU is typically allotted.

### DETAILED DESCRIPTION OF THE PREFERRED EMBODIMENTS

Preferred embodiments of the present invention will now be described with reference to the accompanying drawings.

### (1) Structure of the recording/reproducing apparatus

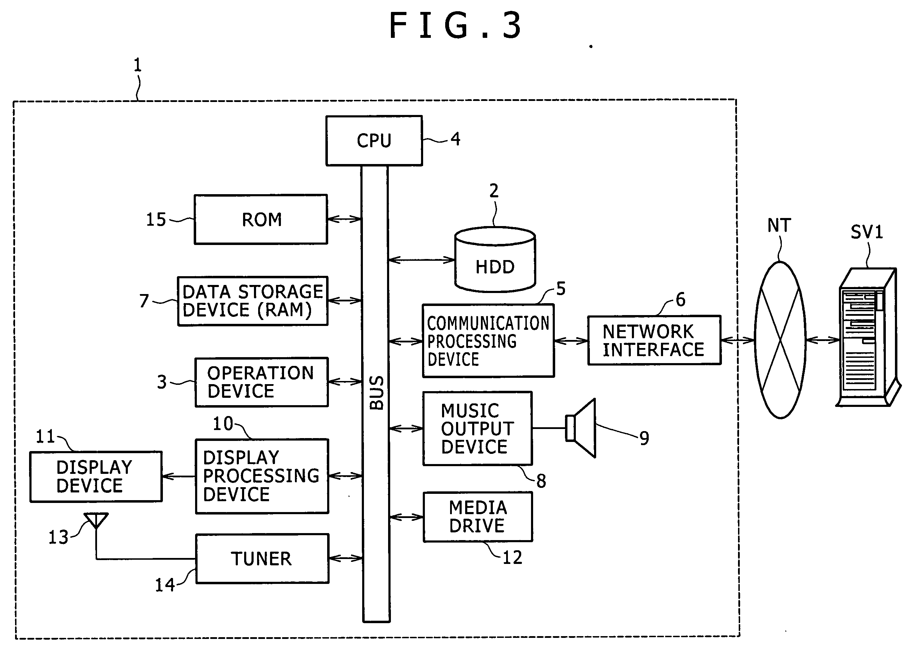

In Fig. 3, reference numeral 1 denotes a recording/reproducing apparatus as a whole. Illustratively, an operation device 3 is operated to initiate a music recording process whereby music data is to be acquired from a music delivery server SV1 and recorded to a hard disk drive 2. In response, a CPU 4 providing overall control on the recording/reproducing apparatus 1 transmits a music data transmission request signal to the music delivery server SV1 through a communication processing device 5, a network interface 6, and the Internet NT, in that order. The signal requests the music delivery server SV1 to transmit music data of interest.

Upon receipt of the music data transmission request signal, the music delivery server SV1 transmits the requested music data to the recording/reproducing apparatus 1 over the Internet NT.

The CPU 4 of the recording/reproducing apparatus 1 receives the music data from the music delivery server SV1 by way of the network interface 6 and communication processing device 5, in that order. The CPU 4 proceeds to encode the received music data and inputs the encoded music data successively to a data storage device (RAM (random access memory) in this case) 7. The CPU 4 of the recording/reproducing apparatus 1 then reads out the encoded music data stored temporarily in the data storage device 7 in the order in which the data was input therein, and records the retrieved data consecutively to the hard disk drive 2.

It should be noted that the encoded music data is not recorded directly to the hard disk drive 2 but stored temporarily in the data storage device 7 before being written to the hard disk drive 2. This arrangement is provided to absorb differences in speed between the process of encoding music data and the process of recording the encoded music data to the hard disk drive 2, thereby stabilizing these processes. Another advantage of this arrangement is that a DMA (direct memory access) transfer feature may be utilized.

In the manner described above, the recording/reproducing apparatus 1 performs its music recording process whereby the music data acquired from the music delivery server SV1 is encoded and the encoded music data is recorded to the hard disk drive 2.

The operation device 3 may also be operated to initiate a music reproducing process whereby encoded music data stored on the hard disk drive 2 is to be reproduced therefrom. In response, the CPU 4 of the recording/reproducing apparatus 1 reads the encoded music data from the hard disk drive 2, decodes the retrieved data, and inputs the decoded music data successively to the data storage device 7. The CPU 2 then reads out the music data stored temporarily in the data storage device 7 in the order in which the data was input therein, and supplies the retrieved data consecutively to a music output device 8. The music output device 8 operating independently of the CPU 4 causes speakers 9 to output music based on the supplied music data.

It should be noted that the decoded music data is not supplied directly to the data output device 8 but stored temporarily in the data storage device 7 before being fed to the music output device 8. This arrangement is provided to absorb differences in speed between the process of decoding encoded music data and the process of outputting music based on the decoded music data, thereby stabilizing these processes as well. This arrangement also permits utilization of the DMA transfer feature.

In the manner described above, the recording/reproducing apparatus 1 carries out its music reproducing process whereby encoded music data is read from the hard disk drive 2 and decoded so that the decoded music data is used as the basis for outputting music.

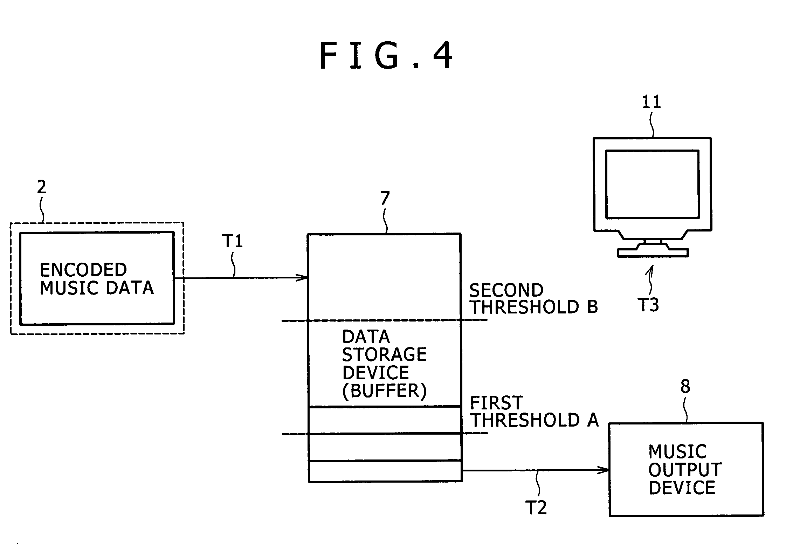

The music reproducing process outlined above will now be described in more detail with reference to Fig. 4. In the music reproducing process, two tasks are generated for execution by the CPU 4 of the recording reproducing apparatus 1: a reproduction-destined music data input task T1, and a reproduction-destined music data readout task T2. The reproduction-destined music data input task T1 involves reading encoded music data from the hard disk drive 2, decoding the read-out music data, and inputting the decoded music data successively to the data storage device 7. The reproduction-destined music data readout task T2 involves reading out the music data stored temporarily in the data storage device 7 in the order in which the data was input therein, and supplying the retrieved music data consecutively to the music output device 8.

Separately, an operation display task T3 is also generated for execution by the CPU of the recording/reproducing apparatus 1 during the music reproducing process. The operation display task T3 involves performing an operation displaying process whereby a user's operations carried out on the operation device 3 are received and information reflecting the received operations is displayed on a display device 11 via a display processing device 10.

During the music reproducing process, the CPU 4 of the recording/reproducing apparatus 1 embodying this invention allots the right to use the CPU 4 (called the CPU use right hereunder) more preferentially to the reproduction-destined music data input task T1 than to the operation display task T3 when the quantity of stored music data in the data storage device 7 is getting smaller. That is, the CPU 4 performs preferentially the reproduction-destined music data inputting process whereby encoded music data is read from the hard disk drive 2 and decoded and the decoded music data is input successively to the data storage device 7.

On the other hand, the CPU 4 of the recording/reproducing apparatus 1 during the music reproducing process allots the right to use the CPU 4 more preferentially to the operation display task T3 than to the reproduction-destined music data input task T1 when the quantity of stored music data in the data storage device 7 is getting larger. That is, the CPU 4 performs preferentially the operation displaying process whereby the user's operations are received and the information reflecting the received operations is displayed on the display device 11.

During the music reproducing process, regardless of the quantity of stored music data in the data storage device 7, the CPU 4 of the recording/reproducing apparatus 1 allots the CPU use right to the reproduction-destined music data readout task T2 at a predetermined level of priority. That is, the CPU 4 performs at a constant speed the reproduction-destined music data reading process whereby temporarily stored music data in the data storage device 7 is read out in the order in which the data was input therein and the retrieved music data is supplied consecutively to the music output device 8.

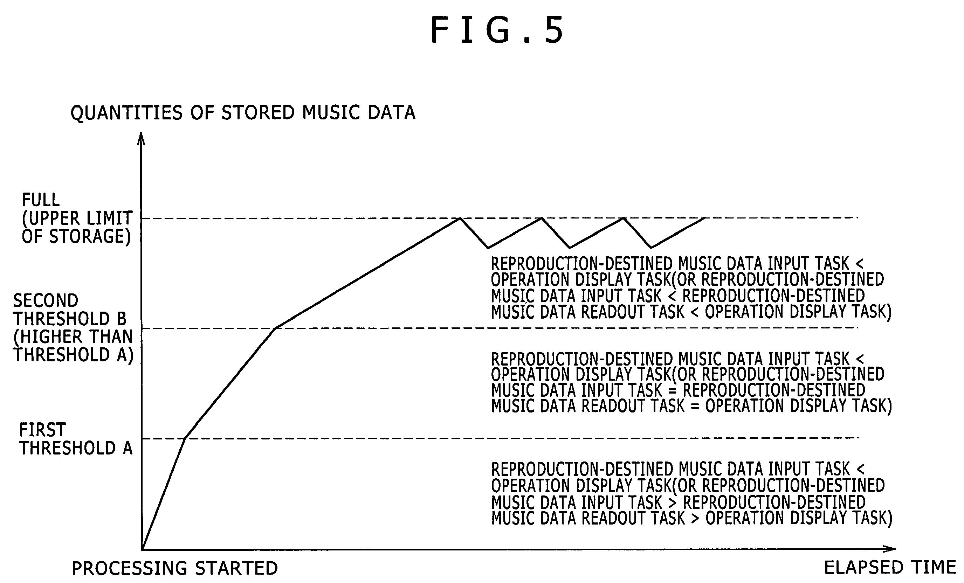

What follows is a still more detailed description of the music reproducing process. Illustratively, as shown in Fig. 5, the CPU 4 of the recording/reproducing apparatus 1 recognizes that the quantity of stored music data in the data storage device 7 at the beginning of the music reproducing process is smaller than a predetermined first threshold A. At this point, the CPU 4 determines that the music data could soon be exhausted because of the small quantity of the music data held in the data storage device 7. Consequently, the CPU 4 allots the CPU use right more preferentially to the reproduction-destined music data input task T1 than to the operation display task T3. Thus the CPU 4 of the recording/reproducing apparatus 1 spends more time on the reproduction-destined music data input task T1 for the reproduction-destined music data inputting process than on the operation display task T3 for the operation displaying process. The result is an increased speed at which to input music data to the data storage device 7.

The CPU 4 of the recording/reproducing apparatus 1 may then recognize that the quantity of stored music data in the data storage device 7 is at least equal to the first threshold A and smaller than a predetermined second threshold B (second threshold B > first threshold A). At this point, the CPU 4 determines that the music data is not much likely to be exhausted because of the growing quantity of the music data in the data storage device 7. The CPU 4 then allots the CPU use right to the reproduction-destined music data input task T1 and to the operation display task T3 in equal proportions.

The CPU 4 of the recording/reproducing apparatus 1 may further recognize that the quantity of stored music data in the data storage device 7 is larger than the second threshold B. At this point, the CPU 4 determines that there is no possibility that the music data will be exhausted because of a sufficiently large quantity of the music data held in the data storage device 7. The CPU 4 then allots the CPU use right more preferentially to the operation display task T3 than to the reproduction-destined music data input task T1. Thus the CPU 4 of the recording/reproducing apparatus 1 spends more time on the operation display task T3 for the operation displaying process than on the reproduction-destined music data input task T1 for the reproduction-destined music data inputting process. The result is an enhanced speed at which to receive the user's operations and to display the information reflecting the received operations on the display device 11.

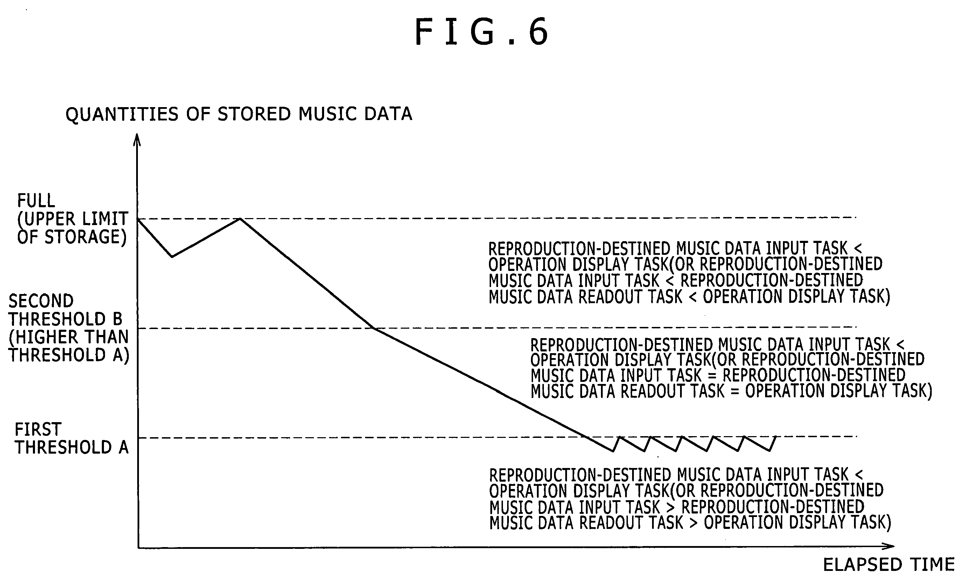

Thereafter, suppose that as shown in Fig. 6, the operation display task T3 is subjected to a larger processing load because of, say, the user's continuous operations; that the reproduction-destined music data inputting process of the reproduction-destined music data input task T1 consequently is not carried out as efficiently as before; and that the quantity of stored data in the data storage device 7 is smaller than the second threshold B and at least equal to the first threshold A.

The CPU 4 of the recording/reproducing apparatus 1, recognizing that the quantity of stored data in the data storage device 7 is smaller than the second threshold B and at least equal to the first threshold A, then determines that the stored music data in the data storage device 7 has dropped somewhat in quantity and is now more likely to be exhausted. As a result, the CPU 4 allots the CPU use right to the reproduction-destined music data input task T1 and operation display task T3 in equal proportions.

Thereafter, the CPU 4 of the recording/reproducing apparatus 1 may come to recognize that the quantity of stored music data in the data storage device 7 is smaller than the first threshold A. The CPU 4 then determines that the stored music data in the data storage device 7 has dropped significantly in quantity and is now highly likely to be exhausted. As a result, the CPU 4 allots the CPU use right more preferentially to the reproduction-destined music data input task T1 than to the operation display task T3.

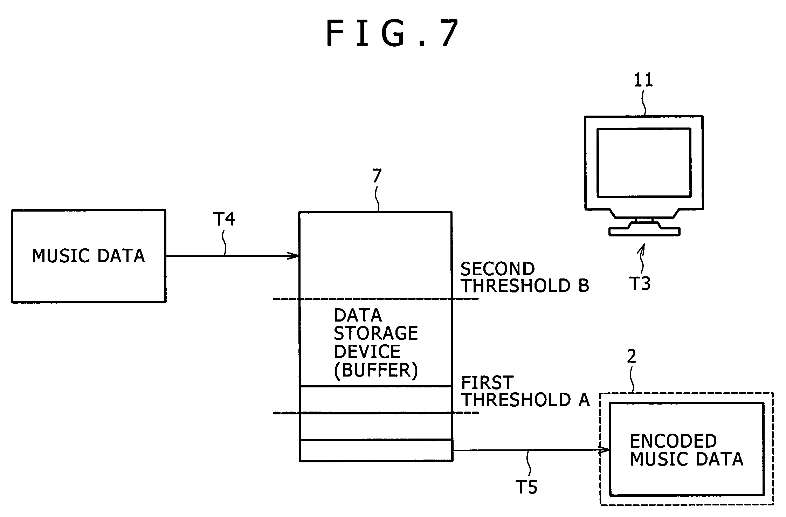

The music recording process outlined above will now be described in more detail with reference to Fig. 7. In the music recording process, two tasks are generated for execution by the CPU 4 of the recording reproducing apparatus 1: a recording-destined music data input task T4, and a recording-destined music data readout task T5. The recording-destined music data input task T4 involves encoding the music data supplied consecutively from the music delivery server SV1 over the Internet NT and inputting the encoded music data successively to the data storage device 7. The recording-destined music data readout task T5 involves reading out consecutively the encoded music data stored temporarily in the data storage device 7 in the order in which the data was input therein and recording successively the retrieved music data to the hard disk drive 2.

Separately, the operation display task T3 is also generated for execution by the CPU of the recording/reproducing apparatus 1 during the music recording process. The operation display task T3 involves performing the operation displaying process.

During the music recording process, the CPU 4 of the recording/reproducing apparatus 1 embodying this invention allots the CPU use right more preferentially to the recording-destined music data readout task T5 than to the operation display task T3 when the quantity of the encoded music data stored in the data storage device 7 is getting larger. That is, the CPU 4 performs preferentially the recording-destined music data reading process whereby the encoded music data is read from the data storage device 7 and recorded successively to the hard disk drive 2.

On the other hand, the CPU 4 of the recording/reproducing apparatus 1 during the music recording process allots the CPU use right more preferentially to the operation display task T3 than to the recording-destined music data readout task T5 when the quantity of the music data stored in the data storage device 7 is getting smaller. That is, the CPU 4 performs preferentially the operation displaying process whereby the user's operations are received and the information reflecting the received operations is displayed on the display device 11.

During the music recording process, regardless of the quantity of the stored music data in the data storage device 7, the CPU 4 of the recording/reproducing apparatus 1 allots the CPU use right to the recording-destined music data input task T4 at a predetermined level of priority. That is, the CPU 4 performs at a constant speed the recording-destined music data inputting process whereby the music data supplied consecutively from the music delivery server SV1 over the Internet NT is encoded and the encoded music data is input successively to the data storage device 7. The major reason for carrying out the recording-destined music data inputting process at a constant speed is that the recording/reproducing apparatus 1 is required to receive without interruption the music data being fed forcibly and continuously from the music delivery server SV1.

What follows is a still more detailed description of the music recording process. Illustratively, the CPU 4 of the recording/reproducing apparatus 1 recognizes that the quantity of the encoded music data stored in the data storage device 7 at the beginning of the music recording process is smaller than the first threshold A. At this point, the CPU 4 determines that the music data is unlikely to overflow the data storage device 7 because of the small quantity of the encoded music data stored therein. Consequently, the CPU 4 allots the CPU use right more preferentially to the operation display task T3 than to the recording-destined music data readout task T5. Thus the CPU 4 of the recording/reproducing apparatus 1 spends more time on the operation display task T3 for the operation displaying process than on the recording-destined music data readout task T5 for the recording-destined music data reading process. The result is an enhanced speed at which to receive the user's operations and to display the information reflecting the received operations on the display device 11.

The CPU 4 of the recording/reproducing apparatus 1 may then recognize that the quantity of the encoded music data stored in the data storage device 7 is at least equal to the first threshold A and smaller than the second threshold B (second threshold B > first threshold A). At this point, the CPU 4 determines that the encoded music data is more likely to overflow the data storage device 7 because of the growing quantity of the music data stored therein. The CPU 4 then allots the CPU use right to the recording-destined music data readout task T5 and to the operation display task T3 in equal proportions.

The CPU 4 of the recording/reproducing apparatus 1 may further recognize that the quantity of the encoded music data stored in the data storage device 7 is larger than the second threshold B. At this point, the CPU 4 determines that there is a high possibility that the encoded music data will overflow the data storage device 7 because of the significantly large quantity of the music data held therein. The CPU 4 then allots the CPU use right more preferentially to the recording-destined music data readout task T5 than to the operation display task T3. Thus the CPU 4 of the recording/reproducing apparatus 1 spends more time on the recording-destined music data readout task T5 for the recording-destined music data reading process than on the operation display task T3 for the operation displaying process. The result is an improved speed at which to read the encoded music data from the data storage device 7.

Suppose that thanks to the boosted speed at which the encoded music data is read from the data storage device 7, the stored data quantity in the data storage device 7 eventually becomes smaller than the second threshold B and at least equal to the first threshold A. In that case, the CPU 4 of the recording/reproducing apparatus 1, recognizing that the quantity of the encoded music data stored in the data storage device 7 is smaller than the second threshold B and at least equal to the first threshold A, determines that the encoded music data in the data storage device 7 has dropped somewhat in quantity and is now less likely to overflow. As a result, the CPU 4 allots the CPU use right to the recording-destined music data readout task T5 and to the operation display task T3 in equal proportions.

Thereafter, the CPU 4 of the recording/reproducing apparatus 1 may come to recognize that the quantity of the encoded music data stored in the data storage device 7 is smaller than the first threshold A. The CPU 4 then determines that the stored music data in the data storage device 7 has dropped significantly in quantity and is now unlikely to overflow. As a result, the CPU 4 allots the CPU use right more preferentially to the operation display task T3 than to the recording-destined music data readout task T5.

### (2) Program module structure of the recording/reproducing apparatus

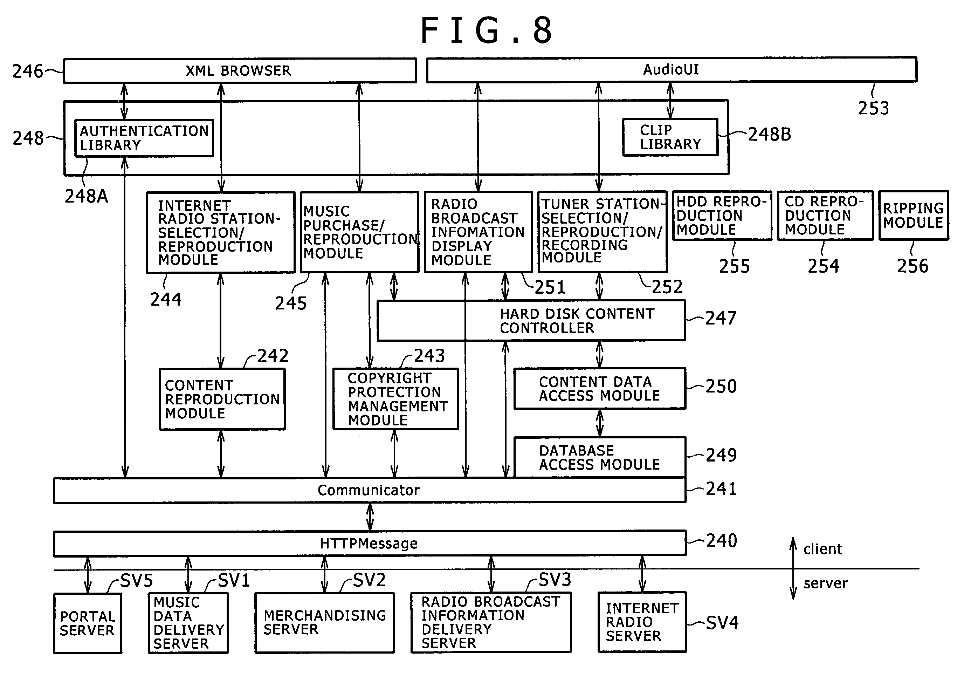

A typical structure of the program modules for the recording/reproducing apparatus 1 will now be described with reference to Fig. 8. The above-described reproduction-destined music data input task T1, reproduction-destined music data readout task T2, recording-destined music data input task T4, and recording-destined music data readout task T5 are generated illustratively on the basis of a content reproduction module 242, a HDD reproduction module 255, and a CD reproduction module 254. The operation display task T3 is generated illustratively on the basis of an audio user interface (UI) 253.

The program modules above are incorporated in the recording/reproducing apparatus 1 of Fig. 3. Operating under an OS (operating system), the program modules communicate with various servers SV1 through SV5.

The major roles played by the servers SV1 through SV5 are as follows: the music delivery server SV1, as discussed above, offers a music delivery service that involves delivering music data to the recording/reproducing apparatus 1. A merchandising server SV2 offers a merchandising service that involves selling CDs (compact discs), DVDs (digital versatile discs) and other articles to the user of the recording/reproducing apparatus 1. A radio broadcast information delivery server SV3 delivers to the recording/reproducing apparatus 1 information about the radio programs that are broadcast by radio broadcast stations. An Internet radio server SV4 acts as a radio broadcast station on the Internet NT delivering radio program data to the recording/reproducing apparatus 1. A portal server SV5 is a server in which to register the recording/reproducing apparatus 1 of the user who has subscribed to these services. When the user wants to make use of any of the services, the portal server SV5 authenticates the user's recording/reproducing apparatus 1.

A HTTP (Hyper Text Transfer Protocol) message program 240 is a program module that permits HTTP communications between various program modules on the one hand and each of the servers SV1 through SV5 on the other hand. A communicator program 241 is a program module that provides data exchanges between the other program modules on the one hand and the HTTP message program 240 on the other hand.

Immediately upstream of the communicator program 241 are the content reproduction module 242 and a copyright protection management module 243. The content reproduction module 242 interprets content data coming through a codec and makes arrangements for reproducing the interpreted data. The copyright protection management module 243 handles information about copyright protection. Further upstream of the content reproduction module 242 and copyright protection management module 243 are an Internet radio station selection/reproduction module 244 and a music purchase/reproduction module 245, respectively. The Internet radio station selection/reproduction module 244 selects and reproduces Internet radio stations. The music purchase/reproduction module 245 manages purchase and reproduction of pieces of music as well as their trials.

The music data reproduced by the Internet radio station selection/reproduction module 244 and music purchase/reproduction module 245 is transferred to the music output device 8. The music output device 8 ultimately outputs the music data as music through the speakers 9.

An XML browser 246 is positioned immediately upstream of the Internet radio station selection/reproduction module 244 and music purchase/reproduction module 245. The XML browser 246 interprets XML files coming from the servers SV1 through SV5 and causes the display device 11 to display videos of the interpreted files.

Illustratively, the pieces of music selected by the user through the XML browser 246 are purchased by the music purchase/reproduction module 245. The purchased pieces of music are written to the hard disk drive 2 by way of a hard disk content controller 247.

The communicator program 241 is connected with an authentication library 248A of a library 248. In conjunction with the portal server SV5 or the like, the authentication library 248A carries out various authentication processes.

Furthermore, a database access module 249, a content data access module 250, and a hard disk content controller 247 are positioned upstream of the communication program 241.

The database access module 249 gains access to various databases established on the hard disk drive 2. The content data access module 250 accesses the content data (encoded music data for this embodiment) stored on the hard disk drive 2. The hard disk content controller 247 manages the content data stored on the hard disk drive 2.

Upstream of the hard disk content controller 247 are a radio broadcast information display module 251 and a tuner station selection/reproduction/recording module 252. The radio broadcast information display module 251 displays the titles, artist names and other information associated with the pieces of music broadcast by radio stations. The tuner station selection/reproduction/recording module 252 selects radio stations and stores (i.e., records) onto the hard disk drive 2 the content data constituted by the pieces of music received from the selected radio station.

Illustratively, the pieces of music received from the radio station selected by way of the audio user interface 253 are written to the hard disk drive 2 through the content data access module 250.

The music data reproduced by the tuner station selection/reproduction/recording module 252 as content data is transferred to the music output device 8. The music output device 8 ultimately outputs the music data as music through the speakers 9.

The radio broadcast information display module 251 receives radio broadcast information from the radio broadcast information delivery server SV3 by way of the HTTP message program 240. The radio broadcast information includes the titles, artist names and other "now on the air" information associated with the pieces of music currently broadcast by the radio station that has been selected by the tuner station selection/reproduction/recording module 252. The radio broadcast information display module 251 causes the display device 11 to display the received radio broadcast information through the audio user interface (UI) 253.

The radio broadcast information displayed on the display device 11 through the audio user interface 253 may be stored temporarily in a clip library 248B of the library 248. According to the user's instructions, the radio broadcast information is eventually stored onto the hard disk drive 2 via the database access module 249.

The CD reproduction module 254 controls the media drive 12 so as to reproduce music data from a CD.

The music data reproduced from the CD by the CD reproduction module 254 is transferred to the music output device 8. The music output device 8 ultimately outputs the music data as music through the speakers 9.

Although not shown, the HDD reproduction module 255 is connected to the hard disk content controller 247 and copyright protection management module 243.

In this setup, the HDD reproduction module 255 reads music data from the hard disk drive 2 as content data under control of the hard disk content controller 247 and reproduces the retrieved music data in accordance with copyright management information supplied from the copyright protection management module 243.

The music data reproduced by the HDD reproduction module 255 in keeping with the copyright protection information is transferred to the music output device 8. The music output device 8 ultimately outputs the reproduced music data as music through the speakers 9.

A ripping module 256 is connected to the hard disk content controller 247 and copyright protection management module 243 (the connection is not shown).

In this setup, the ripping module 256 controls the CD reproduction module 254, copyright protection management module 243, and hard disk content controller 247 in such a manner that the music data reproduced from the CD by the CD reproduction module 254 is stored onto the hard disk drive 2 under control of the hard disk content controller 247 along with the copyright management information supplied from the copyright protection management module 243 for music data management.

### (3) Task controlling procedure for the music reproducing process

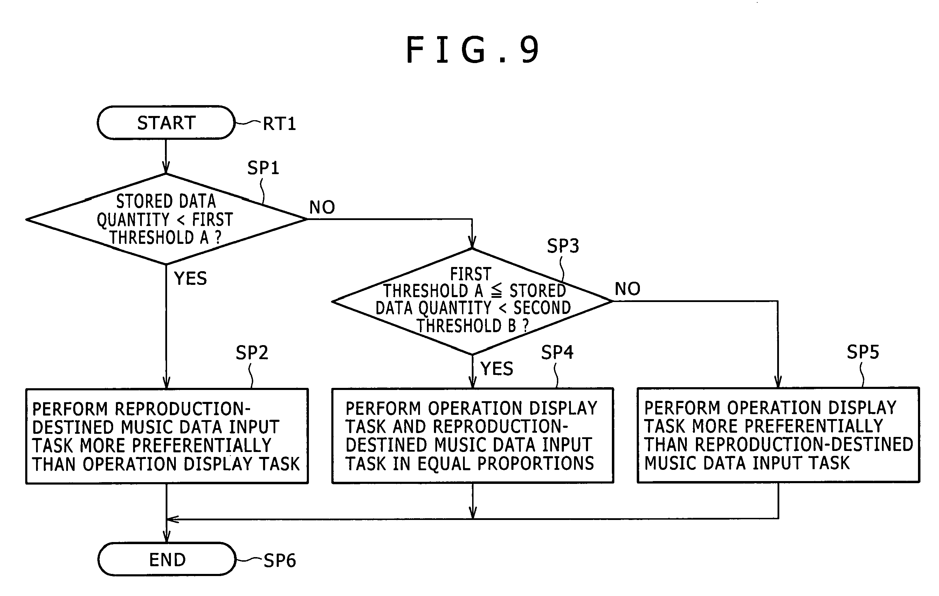

A task controlling procedure RT1 for the music reproducing process will now be described with reference to Fig. 9.

A music reproducing operation carried out on the operation device 3 of the recording/reproducing apparatus 1 starts the music reproducing process. The CPU 4 of the recording/reproducing apparatus 1 then goes to step SP1 and checks to determine whether the quantity of music data stored in the data storage device 7 is smaller than the first threshold A.

If in step SP1 the quantity of music data in the data storage device 7 is found smaller than the first threshold A, that means the music data in the data storage device 7 has dropped in quantity and is likely to be exhausted. In that case, the CPU 4 of the recording/reproducing apparatus 1 goes to step SP2. In step SP2, the CPU 4 allots the CUP use right more preferentially to the reproduction-destined music data input task T1 than to the operation display task T3. That is, the reproduction-destined music data inputting process is performed more preferentially than the operation displaying process. After the processing, the CPU 4 reaches step SP6 and terminates the task controlling procedure RT1 for the music reproducing process.

If in step SP1 the quantity of music data in the data storage device 7 is not found smaller than the first threshold A, then the CPU 4 of the recording/reproducing apparatus 1 goes to step SP3. In step SP3, the CPU 4 checks to determine whether the quantity of music data stored in the data storage device 7 is at least equal to the first threshold A and smaller than the second threshold B.

If in step SP3 the quantity of music data in the data storage device 7 is found at least equal to the first threshold A and smaller than the second threshold B, that means the music data in the data storage device 7 is fairly large in quantity and is not very likely to be exhausted. In that case, the CPU 4 of the recording/reproducing apparatus 1 goes to step SP4. In step SP4, the CPU 4 allots the CPU use right to the reproduction-destined music data input task T1 and to the operation display task T3 in equal proportions. That is, both the reproduction-destined music data inputting process and the operation displaying process are carried out in equal proportions. After the processing, the CPU 4 reaches step SP6 and terminates the task controlling procedure RT1 for the music reproducing process.

If in step SP3 the quantity of music data in the data storage device 7 is found neither at least equal to the first threshold A nor smaller than the second threshold B, that means the music data quantity in the data storage device 7 is larger than the second threshold B. The CPU 4 of the recording/reproducing apparatus 1 then determines that the music data in the data storage device 7 is sufficiently large in quantity and is unlikely to be exhausted. In that case, the CPU 4 goes to step SP5 and allots the CPU use right more preferentially to the operation display task T3 than to the reproduction-destined music data input task T1. That is, the operation displaying process is carried out more preferentially than the reproduction-destined music data inputting process. After the processing, the CPU 4 reaches step SP6 and terminates the task controlling procedure RT1 for the music reproducing process.

### (4) Task controlling procedure for the music recording process

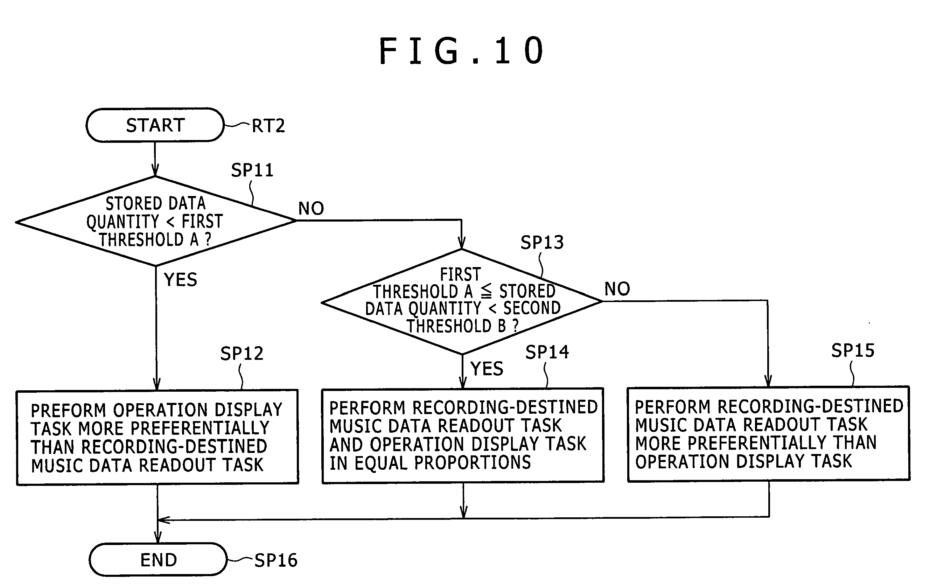

A task controlling procedure RT2 for the music recording process will now be described with reference to Fig. 10.

A music recording operation carried out on the operation device 3 of the recording/reproducing apparatus 1 starts the music recording process. The CPU 4 of the recording/reproducing apparatus 1 then goes to step SP11 and checks to determine whether the quantity of encoded music data stored in the data storage device 7 is smaller than the first threshold A.

If in step SP11 the quantity of encoded music data in the data storage device 7 is found smaller than the first threshold A, that means the encoded music data in the data storage device 7 has dropped in quantity and is unlikely to overflow. In that case, the CPU 4 of the recording/reproducing apparatus 1 goes to step SP12. In step SP12, the CPU 4 allots the CUP use right more preferentially to the operation display task T3 than to the recording-destined music data readout task T5. That is, the operation displaying process is performed more preferentially than the recording-destined music data reading process. After the processing, the CPU 4 reaches step SP16 and terminates the task controlling procedure RT2 for the music recording process.

If in step SP11 the quantity of encoded music data in the data storage device 7 is not found smaller than the first threshold A, then the CPU 4 of the recording/reproducing apparatus 1 goes to step SP13. In step SP13, the CPU 4 checks to determine whether the quantity of encoded music data stored in the data storage device 7 is at least equal to the first threshold A and smaller than the second threshold B.

If in step SP13 the quantity of encoded music data in the data storage device 7 is found at least equal to the first threshold A and smaller than the second threshold B, that means the encoded music data in the data storage device 7 is fairly large in quantity and is moderately likely to overflow. In that case, the CPU 4 of the recording/reproducing apparatus 1 goes to step SP14. In step SP14, the CPU 4 allots the CPU use right to the recording-destined music data readout task T5 and to the operation display task T3 in equal proportions. That is, both the recording-destined music data reading process and the operation displaying process are carried out in equal proportions. After the processing, the CPU 4 reaches step SP16 and terminates the task controlling procedure RT2 for the music recording process.

If in step SP13 the quantity of encoded music data in the data storage device 7 is found neither at least equal to the first threshold A nor smaller than the second threshold B, that means the encoded music data quantity in the data storage device 7 is larger than the second threshold B. The CPU 4 of the recording/reproducing apparatus 1 then determines that the encoded music data in the data storage device 7 is significantly large in quantity and is highly likely to overflow. In that case, the CPU 4 goes to step SP15 and allots the CPU use right more preferentially to the recording-destined music data readout task T5 than to the operation display task T3. That is, the recording-destined music data reading process is carried out more preferentially than the operation displaying process. After the processing, the CPU 4 reaches step SP16 and terminates the task controlling procedure RT2 for the music reproducing process.

### (5) Operations and effects

During the music reproducing process described above, the CPU 4 of the recording/reproducing apparatus 1 allots the CPU use right more preferentially to the reproduction-destined music data input task T1 than to the operation display task T3 when music data stored in the data storage device 7 becomes smaller in quantity. The reproduction-destined music data inputting process is then carried out preferentially, whereby music data is input successively to the data storage device 7.

The above feature enables the recording/reproducing apparatus 1 during the music reproducing process to raise the speed at which to input music data to the data storage device 7 when the music data stored in the data storage device 7 drops in quantity and becomes more likely to be exhausted. This makes it possible to avoid exhausting the music data in the data storage device 7 so that music may be output from the music output device 8 without interruption.

During the music reproducing process, the CPU 4 of the recording/reproducing apparatus 1 allots the CPU use right more preferentially to the operation display task T3 than to the reproduction-destined music data input task T1 when the music data in the data storage device 7 becomes larger in quantity. The operation displaying process is then carried out preferentially, whereby the user's operations are received and information reflecting the received operations is displayed on the display device 11.

The feature above enables the recording/reproducing apparatus 1 during the music reproducing process to increase the speed at which to receive the user's operations and to display on the display device 11 the information reflecting the received operations when the music data in the data storage device 7 gets larger in quantity and is thus less likely to be exhausted. This allows the recording/reproducing apparatus 1 to enhance its usability appreciably from the user's point of view.

Furthermore, during the music recording process, the CPU 4 of the recording/reproducing apparatus 1 allots the CPU use right more preferentially to the recording-destined music data readout task T5 than to the operation display task T3 when the encoded music data in the data storage device 7 becomes larger in quantity. The recording-destined music data reading process is then carried out preferentially, whereby the encoded music data is read from the data storage device 7 and recorded successively to the hard disk drive 2.

The above feature enables the recording/reproducing apparatus 1 during the music recording process to raise the speed at which to read the encoded music data from the data storage device 7 when the encoded music data stored in the data storage device 7 gets larger in quantity and becomes more likely to overflow. This makes it possible to avoid letting the encoded music data overflow the data storage device 7 so that the encoded music data may be recorded integrally without data dropouts.

During the music recording process, the CPU 4 of the recording/reproducing apparatus 1 allots the CPU use right more preferentially to the operation display task T3 than to the recording-destined music data readout task T5 when the encoded music data in the data storage device 7 becomes smaller in quantity. The operation displaying process is then carried out preferentially, whereby the user's operations are received and information reflecting the received operations is displayed on the display device 11.

The feature above enables the recording/reproducing apparatus 1 during the music recording process to increase the speed at which to receive the user's operations and to display on the display device 11 the information reflecting the received operations when the encoded music data in the data storage device 7 gets smaller in quantity and is thus less likely to overflow. This also allows the recording/reproducing apparatus 1 to enhance its usability appreciably from the user's point of view.

As described and according to the present invention, the recording/reproducing apparatus 1 during the music reproducing process can raise the speed at which to input music data to the data storage device 7 when the music data stored in the data storage device 7 drops in quantity and becomes more likely to be exhausted. This makes it possible to avoid exhausting the music data held in the data storage device 7. During the music recording process, the recording/reproducing apparatus 1 can boost the speed at which to read encoded music data from the data storage device 7 when the encoded music data stored in the data storage device 7 increases in quantity and becomes more likely to overflow. This prevents the overflow of the encoded music data stored in the data storage device 7. In this manner, the inventive recording/reproducing apparatus 1 can suitably adjust the quantity of music data held in the data storage device 7.

### (6) Other variations

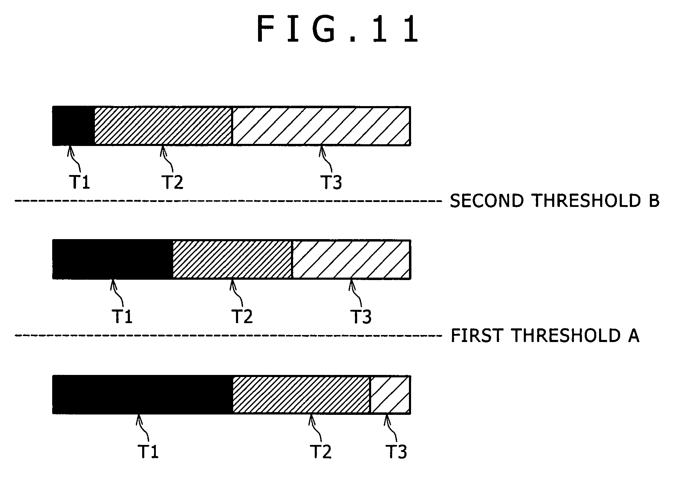

As the above-described embodiment of the present invention, the recording/reproducing apparatus 1 during the music reproducing process was shown allotting the CPU use right to the reproduction-destined music data readout task T2 at a predetermined level of priority. However, this is not limitative of the present invention. Alternatively, when the quantity of music data stored in the data storage device 7 is smaller than the first threshold A, a recording/reproducing apparatus practiced as another variation of the invention may allot the CPU use right preferentially to the reproduction-destined music data input task T1, to the reproduction-destined music data readout task T2 and to the operation display task T3, in that order, as depicted in Fig. 11. When the quantity of music data in the data storage device 7 is at least equal to the first threshold A and smaller than the second threshold B, this recording/reproducing apparatus may allot the CPU use right to the reproduction-destined music data input task T1, to the reproduction-destined music data readout task T2, and to the operation display task T3 in equal proportions. When the quantity of music data in the data storage device 7 is larger than the threshold B, this recording/reproducing apparatus may allot the CPU use right preferentially to the operation display task T3, to the reproduction-destined music data readout task T2 and to the reproduction-destined music data input task T1, in that order.

As the above-described embodiment of the present invention, the recording/reproducing apparatus 1 during the music recording process was shown allotting the CPU use right to the recording-destined music data input task T4 at a predetermined level of priority. However, this is only an example and not limitative of the present invention. Alternatively, when the quantity of encoded music data stored in the data storage device 7 is smaller than the first threshold A, a recording/reproducing apparatus practiced as yet another variation of the invention may allot the CPU use right preferentially to the operation display task T3, to the recording-destined music data input task T4 and to the recording-destined music data readout task T5, in that order. When the quantity of encoded music data in the data storage device 7 is at least equal to the first threshold A and smaller than the second threshold B, this recording/reproducing apparatus may allot the CPU use right to the recording-destined music data readout task T5, to the recording-destined music data input task T4 and to the operation display task T3 in equal proportions. When the quantity of encoded music data in the data storage device 7 is larger than the threshold B, this recording/reproducing apparatus may allot the CPU use right preferentially to the recording-destined music data readout task T5, to the recording-destined music data input task T4 and to the operation display task T3, in that order.

In connection with the above-described embodiment of the present invention, the reproduction-destined music data input task T1 was shown to be a task that involves reading encoded music data from the hard disk drive 2, decoding the retrieved music data, and inputting the decoded music data successively to the data storage device 7 during the music reproducing process. Alternatively, the reproduction-destined music data input task T1 may be a task involving forwarding the encoded music data retrieved from the hard disk drive 2 to the data storage device 7 without decoding the data. In this case, the reproduction-destined music data readout task T2 reads successively the encoded music data that was first placed into the data storage device 7, decodes the retrieved music data, and supplies the decoded music data consecutively to the music output device 8.

The steps constituting the procedures shown in the flowcharts of Figs. 9 and 10 may be constituted either by hardware or by functional modules of software. Programs for implementing the procedures may be stored on a recording medium such as disks or a memory. That recording medium is loaded into a computer or like equipment so that the programs may be installed therein from the loaded medium. The installed programs then enable the computer to function as the recording or reproducing apparatus of which the functions have been discussed above. These programs might also be downloaded to the computer as signals.

In the foregoing description of the embodiment of the present invention, it was assumed that the music data acquired externally by the recording/reproducing apparatus originates from the music delivery server SV1 and is transmitted from there over the Internet NT. Alternatively, music data may be acquired from diverse sources such as radio stations via an antenna 13 and a tuner 14 or storage media including CDs (Compact Discs) through the media drive 12.

In the foregoing description, the data to be recorded or reproduced by the inventive recording/reproducing apparatus 1 was shown to be music data representative of music. However, this is only and example and not limitative of the present invention. Alternatively, video data that represents images and pictures, text information data denoting text information, content data constituting programs, and other diverse data may also be handled by the inventive apparatus.

The above-described embodiment of the present invention was shown to have its data storage device 7 (buffer) constituted by a RAM accommodating music data and encoded music data in temporary storage. Alternatively, other diverse storage devices including semiconductor memories may be utilized as long as they are capable of temporarily storing data.

For the above-described embodiment of the present invention, it was assumed that the encoded music data derived from externally acquired music data through encoding is compression-encoded music data. Alternatively, the encoded music data may be any one of other types practiced through the use of diverse encryption techniques.

In the foregoing description, the CPU 4 of the recording/reproducing apparatus 1 was shown carrying out the task controlling procedures RT1 and RT2 on a software basis, i.e., in accordance with the programs installed from the recording medium such as CDs onto the hard disk drive 2 or in keeping with the programs preinstalled in a ROM (read only memory) 15. However, this is only an example and not limitative of the invention. Alternatively, the recording/reproducing apparatus 1 may be equipped with circuits for executing the task controlling procedures RT1 and RT2. That is, the recording/reproducing apparatus 1 may perform the task controlling procedures RT1 and RT2 on a hardware basis.

The above-described embodiment of the present invention was shown to have the music output device 8 furnished as its data reproduction processing device whereby supplied music data (e.g., PCM (pulse code modulation) based music data) is reproduced and the resulting music is output through the speakers 9. Alternatively, the invention may be practiced using any other suitable data reproduction processing device capable of reproducing varieties of types of data.

In connection with the above-described embodiment of the present invention, the recording medium on which to record encoded data was shown to be the hard disk drive 2. Alternatively, any other suitable recording medium may be utilized, such as semiconductor memories, CDs, or DVDs.

As the above-described embodiment of the present invention, the recording/reproducing apparatus 1 was shown to establish two thresholds A and B for the data storage device 7 as criteria by which to determine whether the data stored in the data storage device 7 has increased or dropped in quantity. Alternatively, three or more thresholds may be established for the data storage device 7 as criteria by which to determine the increase or decrease in the quantity of data stored in the data storage device 7.

Embodiments of the present invention can therefore provide a reproducing apparatus including a data input device configured to perform a data inputting process whereby either encoded data or data obtained by decoding the encoded data is input to a storage device. A data readout device is configured to perform a data reading process whereby the input data stored into the data storage device during the data inputting process is read out and the read-out input data is supplied to a data reproduction processing device. An operation display device is configured to perform a displaying operation process whereby an operation made by a user is received and information reflecting the received operation is displayed. A control device is configured to control the data input device and the operation display device in such a manner that the data inputting process is performed more preferentially than the operation displaying process if the quantity of the input data stored in the data storage device is less than a predetermined threshold.

It should be understood by those skilled in the art that various modifications, combinations, sub-combinations and alterations may occur depending on design requirements and other factor in so far as they are within the scope of the appended claims or the equivalents thereof.

Various respective aspects and features of the invention are defined in the appended claims. Features from the dependent claims may be combined with features of the independent claims as appropriate and not merely as explicitly set out in the claims.

## Claims

1. A reproducing apparatus comprising:
a data input device configured to perform a data inputting process whereby either encoded data or the data obtained by decoding said encoded data is input as input data to a storage device;
a data readout device configured to perform a data reading process whereby said input data stored into said data storage device during said data inputting process performed by said data input device is read out and the read-out input data is supplied to a data reproduction processing device;
an operation display device configured to perform an operation displaying process whereby an operation made by a user is received and information reflecting the received operation is displayed; and
a control device configured to control said data input device and said operation display device in such a manner that said data inputting process is performed more preferentially than said operation displaying process if the quantity of said input data stored in said data storage device is less than a predetermined threshold.

2. The reproducing apparatus according to claim 1, wherein said control device controls said data readout device in such a manner that said data reading process is performed at a predetermined level of priority.

3. The reproducing apparatus according to claim 1, wherein:
said control device controls said data input device, said data readout device, and said operation display device in such a manner that said data inputting process is performed more preferentially than said data reading process and that said data reading process is performed more preferentially than said operation displaying process if said quantity of the stored data in said data storage device is less than a first threshold;
said control device controls said data input device, said data readout device, and said operation display device in such a manner that said data inputting process, said data reading process, and said operation displaying process are performed in equal proportions if said quantity of said stored data in said data storage device is at least equal to said first threshold and less than a second threshold which is higher than said first threshold; and
said control device controls said data input device, said data readout device, and said operation display device in such a manner that said operation displaying process is performed more preferentially than said data reading process and that said data reading process is performed more preferentially than said data inputting process if said quantity of said stored data in said data storage device is at least equal to said second threshold.

4. A reproducing method comprising the steps of:
performing a data inputting process whereby either encoded data or the data obtained by decoding said encoded data is input as input data to a storage device;
performing a data reading process whereby said input data stored into said data storage device during said data inputting process performed in said data inputting process performing step is read out and the read-out input data is supplied to a data reproduction processing device;
performing an operation displaying process whereby an operation made by a user is received and information reflecting the received operation is displayed; and
controlling said data inputting process performing step and said operation displaying process performing step in such a manner that said data inputting process is performed more preferentially than said operation displaying process if the quantity of said input data stored in said data storage device is less than a predetermined threshold.

5. A reproducing program for causing a computer to carry out a procedure comprising the steps of:
performing a data inputting process whereby either encoded data or the data obtained by decoding said encoded data is input as input data to a storage device;
performing a data reading process whereby said input data stored into said data storage device during said data inputting process performed in said data inputting process performing step is read out and the read-out input data is supplied to a data reproduction processing device;
performing an operation displaying process whereby an operation made by a user is received and information reflecting the received operation is displayed; and
controlling said data inputting process performing step and said operation displaying process performing step in such a manner that said data inputting process is performed more preferentially than said operation displaying process if the quantity of said input data stored in said data storage device is less than a predetermined threshold.

6. A recording apparatus comprising:
a data input device configured to perform a data inputting process whereby data is encoded and the encoded data is input to a data storage device;
a data readout device configured to perform a data reading process whereby said encoded data stored into said data storage device during said data inputting process performed by said data input device is read out and the read-out encoded data is recorded to s recording medium;
an operation display device configured to perform an operation displaying process whereby an operation made by a user is received and information reflecting the received operation is displayed; and
a control device configured to control said data readout device and said operation display device in such a manner that said data reading process is performed more preferentially than said operation displaying process if the quantity of said encoded data stored in said data storage device is at least equal to a predetermined threshold.

7. The recording apparatus according to claim 6, wherein said control device controls said data input device in such a manner that said data inputting process is performed at a predetermined level of priority.

8. The recording apparatus according to claim 6, wherein
said control device controls said data input device, said data readout device, and said operation display device in such a manner that said operation displaying process is performed more preferentially than said data inputting process and that said data inputting process is performed more preferentially than said data reading process if said quantity of the stored data in said data storage device is less than a first threshold;
said control device controls said data input device, said data readout device, and said operation display device in such a manner that said data inputting process, said data reading process, and said operation displaying process are performed in equal proportions if said quantity of said stored data in said data storage device is at least equal to said first threshold and less than a second threshold which is higher than said first threshold; and
said control device controls said data input device, said data readout device, and said operation display device in such a manner that said data reading process is performed more preferentially than said data inputting process and that said data inputting process is performed more preferentially than said operation displaying process if said quantity of said stored data in said data storage device is at least equal to said second threshold.

9. A recording method comprising the steps of:
performing a data inputting process whereby data is encoded and the encoded data is input to a data storage device;
performing a data reading process whereby said encoded data stored into said data storage device during said data inputting process performed in said data inputting process performing step is read out and the read-out encoded data is recorded to a recording medium;
performing an operation displaying process whereby an operation made by a user is received and information reflecting the received operation is displayed; and
controlling said data reading process performing step and said operation displaying process performing step in such a manner that said data reading process is performed more preferentially than said operation displaying process if the quantity of said encoded data stored in said data storage device is at least equal to a predetermined threshold.

10. A recording program for causing a computer to carry out a procedure comprising the steps of:
performing a data inputting process whereby data is encoded and the encoded data is input to a data storage device;
performing a data reading process whereby said encoded data stored into said data storage device during said data inputting process performed in said data inputting process performing step is read out and the read-out encoded data is recorded to a recording medium;
performing an operation displaying process whereby an operation made by a user is received and information reflecting the received operation is displayed; and
controlling said data reading process performing step and said operation displaying process performing step in such a manner that said data reading process is performed more preferentially than said operation displaying process if the quantity of said encoded data stored in said data storage device is at least equal to a predetermined threshold.
